(19) Europäisches Patentamt
European Patent Office
Office européen des brevets

(11) Publication number: **0 232 162 B1**

(12) **EUROPEAN PATENT SPECIFICATION**

(45) Date of publication of patent specification: **04.05.94** (51) Int. Cl.5: **G11B 5/72**

(21) Application number: **87300919.5**

(22) Date of filing: **03.02.87**

The file contains technical information submitted after the application was filed and not included in this specification

(54) **Magnetic recording medium and process for producing the same.**

(30) Priority: **04.02.86 JP 21274/86**

(43) Date of publication of application:
**12.08.87 Bulletin 87/33**

(45) Publication of the grant of the patent:
**04.05.94 Bulletin 94/18**

(84) Designated Contracting States:
**DE FR GB**

(56) References cited:
**DE-A- 3 000 583**
**DE-A- 3 539 380**
**FR-A- 2 554 625**

**PATENT ABSTRACTS OF JAPAN, vol. 9, no. 239 (P-391)[1962], 25th September 1985; & JP-A-60 93 638**

**PATENT ABSTRACTS OF JAPAN, vol. 9, no. 195 (P-379)[1918], 13th August 1985; & JP-A-60 61 918**

(73) Proprietor: **HITACHI, LTD.**
**6, Kanda Surugadai 4-chome**
**Chiyoda-ku, Tokyo 101(JP)**

(72) Inventor: **Shoji, Mitsuyoshi**
**1621 Tomobe**
**Juomachi**
**Taga-gun Ibaraki-ken(JP)**
Inventor: **Ito, Yutaka**
**16 Yamatocho-1-chome**
**Takahagi-shi(JP)**
Inventor: **Nakano, Fumio**
**18-5 Hanayamacho-1-chome**
**Hitachi-shi(JP)**
Inventor: **Narahara, Toshikazu**
**909-5 Muramatsu**
**Tokaimura**
**Naka-gun Ibaraki-ken(JP)**

(74) Representative: **Paget, Hugh Charles Edward et al**
**MEWBURN ELLIS**
**York House**
**23 Kingsway**
**London WC2B 6HP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

This invention relates to a magnetic recording medium having an organic coating as a sliding surface, particularly to a magnetic recording medium of excellent durability, and a process for producing the same.

Magnetic recording media have widely been used in a variety of fields as media for a large capacity information recording and reproducing apparatus. There are magnetic tapes as recording media for voices, communications, etc.; floppy disks as digital signal recording apparatus; hard disk media as peripheral recording apparatus for large-scale computers; etc. These recording media are expected to increase their recording capacities and at the same time required to have reliability bearable for long time operation.

In the case of magnetic recording media, information is usually written and read out while conducting sliding with a head. In a special case, there is employed an apparatus wherein a medium and a head do not slide and information is written and read out while maintaining a very narrow constant distance between the medium and the head. In this case, it is admitted that the head and the medium are subjected to a contact sliding with a certain probability.

An increase of recording capacity inevitably makes the sliding conditions severe and thus the improvement in durability is an essential requirement. There has been obtained no medium having sufficient durability.

In order to improve the durability, it is proposed to use a lubricant for reducing friction and wear at the time of sliding. For example, a long-chain fatty acid derivative such as oleic acid or stearic acid as a lubricant is impregnated into a magnetic recording medium layer. This method is mainly used for a so-called coating medium wherein a mixture of magnetic particles and a binder is coated on a support member. But, since the lubricant evaporates gradually from the surface, it is difficult to expect lubricating properties for a long period of time.

In order to improve such a disadvantage, there has been proposed a process for coating a fluorine series lubricant which has better lubricating properties on a disk surface. According to this process, a sufficient effect can be obtained at an initial stage, but the lubricant is peeled off when used for a long period of time, resulting in reducing the effect undesirably.

On the other hand, in order to prevent the peeling of the lubricant at an initial stage, it is proposed to fix a fluorine series lubricant on the surface of the medium (US-A-4,120,995). The fluorine series lubricating compound is represented by the formula:

$$R_f - O - (CH_2)_n - SiX$$

wherein $R_f$ is a perfluoroalkyl group; n is an integer of 2 to 10; and X is a halogen, cyanide or alkoxy group, and is a lubricant which reacts with a metal film surface of oxide film surface, followed by fixation. According to the process for fixing the fluorine series lubricant represented by the formula mentioned above on the magnetic layer surface, since the reaction system is on the solid surface, the reaction is difficult, and it is difficult to obtain a uniform reaction film and very difficult to apply such a process to a practical production line. Further, since the molecular weight of the fluorine chain is too small to exhibit lubricating effect, the durability of magnetic layer is not improved sufficiently.

US-A-4 529 659 describes a magnetic recording medium having a non-magnetic substrate, a magnetic layer formed on said substrate, an intermediate layer of aminosilane or epoxysilane on said magnetic layer and a lubricating layer on the intermediate layer. The lubricating layer is a fluorinated hydrocarbon polymer having a terminal carboxyl or sulfonic acid group through which it is coupled to the intermediate layer by reaction with the aminosilane or epoxysilane.

### SUMMARY OF THE INVENTION

It is an object of this invention to provide a magnetic recording medium improved in reliability and having a magnetic coating film having durability for a long period of time.

This invention provides a magnetic recording medium as set out in claim 1.

This invention also provides use of this magnetic recording medium in a magnetic head-magnetic recording medium assembly, which comprises

(I) the magnetic recording medium

(II) a magnetic head having a slidable magnetic tip for recording information into and reading information out from said recording medium, and

(III) a means for driving said recording medium relative to said magnetic head so as to carry out the recording and reading out of the information.

The invention further provides a process for producing a magnetic recording medium as set out in claim 14.

BRIEF DESCRIPTION OF THE DRAWINGS

Figs. 1 and 2 are cross-sectional views of magnetic medium surfaces of coating type and continuous thin film type magnetic disks. Fig. 3 is a schematic diagram showing one example of the magnetic head-magnetic recording medium assembly according to this invention. Figs. 4(a) and 4(b) are fluorine compound concentration distribution charts of surface and inner portions of a fluorine-containing organic compound (compound No. 7)-containing coating film by ESCA (Electron Spectroscopy for Chemical Analysis).

DESCRIPTION OF THE PREFERRED EMBODIMENTS

As the non-magnetic substrate, there can be used a conventionally used one. Among them, continuous and self-supporting ones are preferable.

As the magnetic layer formed on the substrate, there can be used a magnetic metal or metal oxide thin layer or a coating layer comprising magnetic particles, a polymer binder and an organic compound having a perfluoro group and a perfluoro hydrocarbon group, said perfluoro hydrocarbon group being connected to or fused in the polymeric binder.

As the magnetic layer, a continuous, and if necessary self-supporting layer is preferable. It is also preferable that the magnetic layer is made of a continuous and homogeneous magnetic material formed on the substrate and having information stored therein in the form of magnetic information.

The magnetic metal or metal oxide layer can be prepared by a conventional vapor deposition, sputtering or plating method.

One feature of the present invention is that at least the surface portion of the magnetic recording medium is made from an organic compound having a perfluoro group and a perfluoro hydrocarbon group (hereinafter referred to as "fluorine-containing organic compound" or "perfluoro compound") connected to or fused in, or miscible with, or adsorbed in a polymeric binder contained in the magnetic layer or in a lubricating surface layer formed on the magnetic layer in order to improve sliding durability.

In order to enhance the sliding durability of the medium, it is necessary to place on the surface a lubricant which can reduce a friction coefficient and reduce a wear rate. The reaction type fluorine series lubricant of the prior art has disadvantages in that the fixing method is very difficult and the sliding durability is insufficient. But according to this invention, the fixing of the coating layer (lubricating surface layer) on the surface of the magnetic recording medium can be carried out easily by forming the coating layer by mixing an effective component of a fluorine-containing organic compound with a polymeric binder, and if necessary, magnetic particles.

Examples of the effective components, i.e. the perfluoro and perfluoro hydrocarbon group, are as follows:

a perfluoropolyether group of the formula:

$$F\left(\underset{\displaystyle CF_3}{\underset{|}{CF}} - CF_2O\right)_n \underset{\displaystyle CF_3}{\underset{|}{CF}} - CO - \qquad (I)$$

wherein n is an integer of 1 to 50, preferably 5 to 30,

a group obtained by bonding linearly a perfluoropolyether group and a polyether group and represented by the formula:

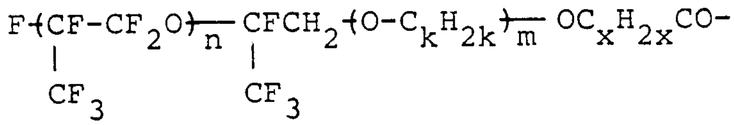

(II)

wherein n is as defined above; m is an integer of 1 to 50, preferably 5 to 20; k is an integer of 1 to 10, preferably 2 to 3; x is an integer of 1 to 10, preferably 2 to 3,

a group of the formula:

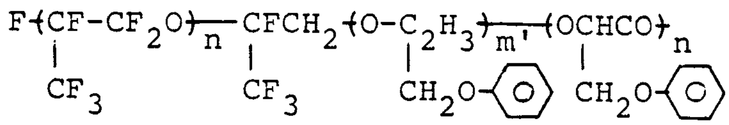

(III)

wherein n is as defined above; and m′ is an integer of 1 to 50, preferably 3 to 30,

a group obtained by bonding linearly a perfluoro-polyether group and a phenylether group and represented by the formula:

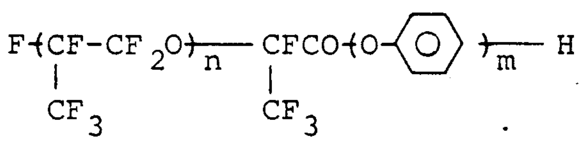

(IV-1)

wherein m and n are as defined above,

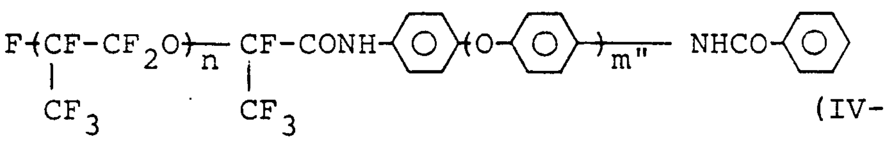

(IV-2)

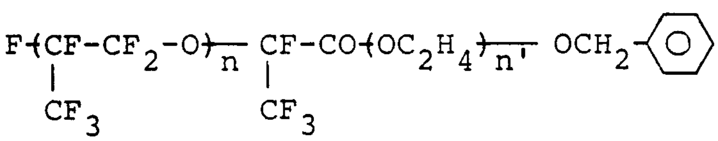

(IV-3)

wherein m″ is an integer of 1 to 5; and n′ is an integer of 1 to 30, preferably 3 to 10.

These fluorine-containing effective (perfluoro) groups can be introduced into polymers as follows:

One method comprises producing an acid chloride containing one of the above-mentioned group, and mixing therewith a reactive polymeric material containing active groups reactive with the acid chloride to complete the reaction. Examples of the active groups reactive with the acid chloride are a hydroxyl group containing active hydrogen, an amine group, and the like. Polymeric materials containing these groups at terminals or side chains can be used in this invention.

Another method for introducing these perfluoro groups into polymeric materials is to mix a fluorine-containing organic compound including one of these groups with a polymeric material (or a polymeric binder).

As the polymeric material (used as the polymeric binder), it is preferable to use those having high heat resistance and difficult to be weared away. Examples of the polymeric materials are polyimides, polyetheramide series resins, phenol resins, epoxy resins, polyurethanes, polyacrylic resins and polyvinyl butyrals. These polymers can be used alone or as complexes thereof or as copolymers thereof.

Among the fluorine-containing organic compounds, those having high heat resistance and difficult to be weared away are preferred.

Preferable fluorine-containing organic compounds have a perfluoro group represented by the formula:

$R_f$ - A - CO - (V)

or are represented by the formula:

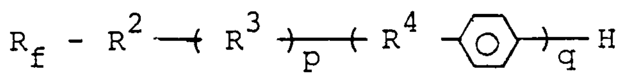 (VI)

wherein $R_f$ is a perfluoro polyoxyalkyl (or perfluoro polyether) group having preferably 5 to 152 carbon atoms, more preferably 17 to 92 carbon atoms;
A is a group represented by the formula:

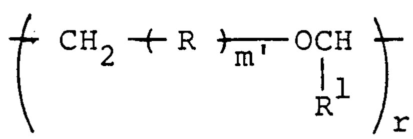 (VII)

wherein R is an oxyalkylene group having 2 to 3 carbon atoms or an oxyalkylene group substituted with an alkyl group, phenoxy group, alkylphenoxy group, etc., such as phenoxy-methyl, phenoxyethyl, etc.; $R^1$ is hydrogen, $CH_3$ or

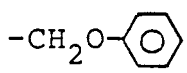 ;

m' is an integer of 1 to 50, preferably 3 to 30; and r is zero or an integer of 1; $R^2$ is $-CH_2$-or -CO- , or may be omitted; $R^3$ is an oxyalkylene group; p is zero or an integer of 1 to 20, preferably 1 to 10; $R^4$ is -COO- , -CONH- , $-CH_2$-O- , -O- , -O-$CH_2$- , or

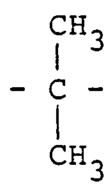 ;

and q is an integer of 1 to 20.

Among the compounds of the formula (VI), preferred ones have a group of the formula: -CONH- , -O- or -COO-as $R^4$.

A poly(amic acid) which is a precursor of a polyimide is a preferred example and a solution thereof is mixed with the above-mentioned fluorine-containing organic compound in a suitable amount. The resulting mixture is mixed with a magnetic coating, coated on a disk, subjected to a heat treatment and fixing of perfluoropolyether groups in a polyimide coating film is carried out.

As a result, the perfluoropolyether groups are selectively exposed on the surface of the medium and function as a lubricating group (or agent). By taking such a structure, no transfer of the lubricant component to a head takes place and the lubricating properties can be maintained for a long period of time.

The magnetic recording medium of this invention can be produced, for example, as follows:

(A) The organic compound having a perfluoro group and a (perfluoro) hydrocarbon group is mixed with a binder component in a coating type medium containing magnetic particles and the perfluoro groups are fixed on the surface of the coating type medium (the structure of Fig. 1).

(B) On the surface of a magnetic continuous thin layer obtained by vapor depositing, sputtering or plating a conventional magnetic metal or magnetic metal oxide, a polymeric material film containing an organic compound having a perfluoro group and a (perfluoro) hydrocarbon group is formed and the perfluoro groups are fixed on the surface thereof (the structure of Fig. 2).

(C) On the magnetic coating film 1 in Fig. 1 or the magnetic continuous thin layer 4 in Fig. 2, a lubricating surface layer containing the organic compound having a perfluoro group and a (perfluoro)-hydrocarbon group (a perfluoro compound layer 5 in Fig. 3) is formed (the structure of Fig. 3).

Figs. 1 and 2 are cross-sectional views of coating type and continuous thin film type magnetic disks wherein numeral 1 denotes a magnetic coating film (a layer containing a perfluoro compound), numeral 2 an aluminum substrate, numeral 3 a lubricating surface layer (a layer containing a perfluoro compound), and numeral 4 a magnetic continuous thin layer.

In this case, the magnetic film may be either a coating type or a continuous thin film type.

In Fig. 3, numeral 5 is the perfluoro compound layer, numeral 6 a magnetic (continuous thin) layer, numeral 7 a disk substrate made of, e.g. aluminum, numeral 8 a motor, numeral 9 a head and numeral 10 a signal reading and writing apparatus.

In the above-mentioned structures, the organic compound having a perfluoro group and a (perfluoro) hydrocarbon group (the perfluoro compound) plays an important role for giving a lubricating surface and bonding to the magnetic thin layer or the magnetic coating film. More precisely, as to the bonding state, the perfluoro hydrocarbon groups of the perfluoro compound are (i) connected to or fused in the polymeric binder, (ii) adsorbed in the polymeric binder, or (iii) miscible with the polymeric binder, which is contained in the magnetic layer or the lubricating surface layer.

This invention is illustrated by way of the following Examples.

Examples 1 to 8

After completely dissolving 57 g (0.525 mole) of sufficiently dehydrated p-phenylenediamine in 1000 g of N-methyl-2-pyrrolidone, 147 g (0.50 mole) of 3,3′,4,4′-biphenyltetracarboxylic acid dianhydride was added thereto. The resulting mixture was sufficiently stirred to yield a solution [A] of poly(amic acid) having repeating units of the formula:

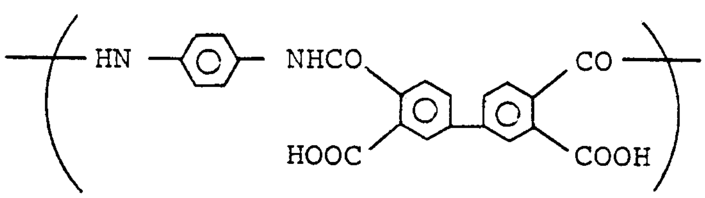

(VIII)

Then, 0.05 mole of a fluorine-containing organic compound listed in Table 1 was added to the poly-(amic acid) solution [A] to prepare a solution [B] with uniform stirring.

Table 1

| Compound No. | Fluorine-containing organic compound |
|---|---|
| 1 | 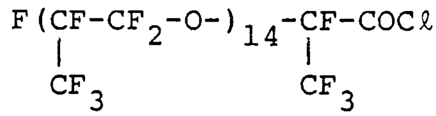 |
| 2 | 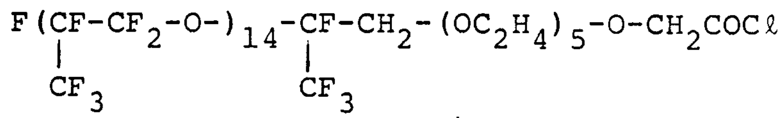 |
| 3 | 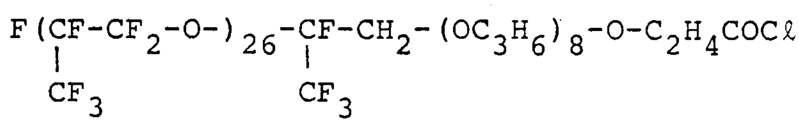 |
| 4 | 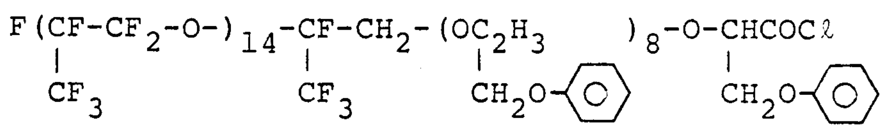 |
| 5 | 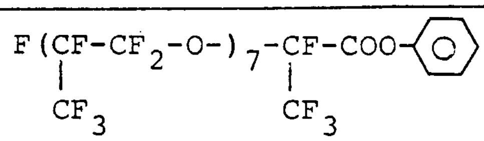 |

- cont'd -

Table 1 (cont'd)

| | |
|---|---|
| 6 | 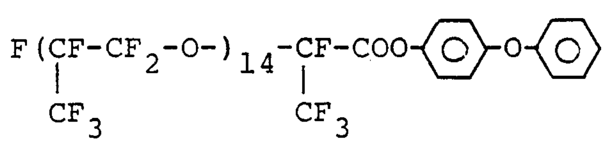 |
| 7 | 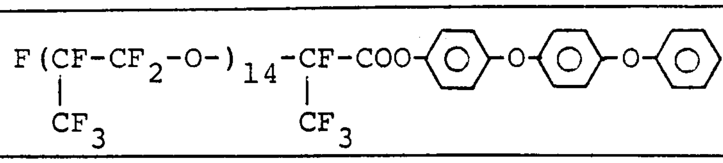 |
| 8 | 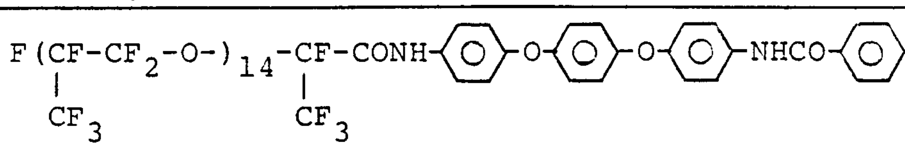 |

As a result, an acid chloride type fluorine-containing compound was reacted with amino groups of the poly-(amic acid) and bonded through a group of the formula: -CONH- . Unreacted fluorine-containing compound was simply mixed with the poly(amic acid) solution. Then, the solution [B] was distilled in vacuum.

On the other hand, a magnetic thin film (0.2 $\mu$m thick) of an alloy of Co-Ni (Co/Ni = 4/1 in weight ratio) was formed on a surface of an aluminum substrate by vapor deposition. On the magnetic thin film, the solution [B] was coated in 0.1 $\mu$m thick. Then, the solution was cured with heating at 300°C to form a

lubricating surface layer.

Density distribution of the fluorine-containing compound on the surface of the coating film and inner portion of the coating film thus obtained was measured. The measurement was conducted by using XSAM 800 type ESCA (Electron Spectroscopy for Chemical Analysis) manufactured by KRATOS Co., Ltd. under conditions of X-rays source (Mg-K $\alpha$ : 12 kV, 12 mA), and scanning (rate : 20 eV/min, number of times : 30). The measurement of the inner portion of the coating film was conducted after etching the coating film surface in 5nm (50 Å) thick with Ar plasma.

Table 2 shows the results of the measurement.

Table 2

| Example No. | Compound No. | Spectral Intensity of ESCA (CPS) | |
|---|---|---|---|
| | | Surface | Inner portion (50 Å) |
| 1 | 1 | 230 | 0 |
| 2 | 2 | 3550 | 0 |
| 3 | 3 | 4800 | 0 |
| 4 | 4 | 5800 | 0 |
| 5 | 5 | 950 | 0 |
| 6 | 6 | 2500 | 0 |
| 7 | 7 | 5200 | 0 |
| 8 | 8 | 5500 | 0 |

As is clear from Table 2, the spectra of the fluorine-containing compounds are only detected from the surface of the coating films and hardly detected from the inner portion (5nm (50 Å)) of the coating films. Fig. 4(a) shows the spectral intensity on the surface of the coating film of Example 7 and Fig. 4(b) shows the spectral intensity in the inner portion of the coating film of Example 7. These results show that the fluorine-containing compounds are selectively collected at the surface portion of the coating films.

Further, durability of the thus obtained magnetic thin films was evaluated by using a spherical surface sliding tester. That is, a load of 10 g was charged on a sapphire spherical surface slider, a disk was rotated at a peripheral speed of 10 m/sec, and a total rotating number until a magnetic thin film was broken was counted. The results are shown in Table 3. In Comparative Example 1, Krytox 143 AC (a trade name), which is a fluorine-containing lubricant manufactured by E.I. du Pont de Nemours & Co., was simply coated on a magnetic thin film in place of the solution [B].

Table 3

| Example No. | Compound No. | Total rotating number until breaking |
|---|---|---|
| 1 | 1 | 45000 |
| 2 | 2 | 84000 |
| 3 | 3 | >92000 |
| 4 | 4 | >92000 |
| 5 | 5 | 8500 |
| 6 | 6 | 75000 |
| 7 | 7 | >92000 |
| 8 | 8 | >92000 |
| Comparative Example 1 | | 700 |

As is clear from Table 3, the lubricating layers of this invention are by far superior in durability to that of Comparative Example 1, since the total rotating numbers until the magnetic thin films are broken are remarkably larger than that of Comparative Example 1.

Examples 9 to 12

Solution [C] was prepared by dissolving a binder comprising 45 g of a bisphenol type epoxy resin, 40 g of a resol type phenol resin and 15 g of polyvinyl butyral resin in 400 g of cyclohexanone, and dispersing 150 g of magnetic iron oxide ($\gamma$-$Fe_2O_3$) particles in the resulting solution by ball milling.

Then, 50 g of a mixture was prepared by mixing equimolar amounts of the resol type phenol resin mentioned above and a fluorine-containing compound listed in Table 1. The resulting mixture was dissolved in 100 parts by weight of cyclohexanone and reacted with heating at 120 °C. After distilling in vacuum, a solution [D] was prepared. To the solution [D] in an amount of 5 g, 100 g of the solution [C] was added to prepare a solution [E]. Further, a solution [F] was prepared by dispersing the solution [E] by ball milling.

Then, the solution [F] was coated on an aluminum substrate, the surface of which had been cleaned previously. The magnetic particles in the coating film were oriented according to a conventional method, followed by curing with heating at 300 °C.

The durability of the thus obtained magnetic coating film was evaluated by using the spherical surface sliding tester in the same manner as described in Examples 1 to 8.

The results are shown in Table 4. For comparison (Comparative Example 2), Krytox 143 AC (mfd. by E.I. du Pont de Nemours & Co.) was mixed with the solution [C] and ball milled to give a well dispersed solution. The resulting solution was coated on an aluminum substrate in the same manner as mentioned above.

Table 4

| Example No. | Compound No. | Total rotating number until breaking |
|---|---|---|
| 9 | 1 | 90000 |
| 10 | 2 | >92000 |
| 11 | 3 | >92000 |
| 12 | 7 | >92000 |
| Comparative Example 2 (Krytox 143 AC) | | 20000 |

As is clear from Table 4, the magnetic coating films according to this invention are by far superior in durability to that of Comparative Example 2.

Examples 13 to 16

Magnetic iron oxide ($\gamma$-$Fe_2O_3$) in an amount of 68 g, 26 g of vinyl chloride-vinyl acetate-vinyl alcohol copolymer VAGH (a trade name, mfd. by U.C.C. in U.S.A.), 5 g of acrylonitrile-butadiene copolymer N1482J (a trade name, mfd. by The Japanese Geon Co., Ltd.), 2 g of polyisocyanate Colonate L (a trade name, mfd. by Nippon Polyurethane Co., Ltd.), 7 g of carbon black, 75 g of toluene, and 75 g of methyl isobutyl ketone were ball milled to prepare a well dispersed solution [G].

On the other hand, an N-methyl-2-pyrrolidone solution [H] of equimolar reaction product of 2,2-bis[4-(4-aminophenoxy)phenyl]propane and a fluorine-containing compound listed in Table 1 was prepared. Into the ball mill, 30 g of the solution [H] was added additionally and sufficiently dispersed to give a solution [J].

The solution [J] was coated on a disk-like polyester film with 75 $\mu$m thick so as to make the dry thickness of the coating 3 $\mu$m, and dried to form a magnetic coating film.

The durability of the thus formed magnetic coating films was evaluated by using the spherical surface sliding tester in the same manner as described in Examples 1 to 8.

The results are shown in Table 5. For comparison (Comparative Example 3), Krytox 143 AC (mfd. by E.I. du Pont de Nemours & Co.) was coated on a magnetic coating film of 3 $\mu$m thick formed by coating the solution [G] on a disk-like polyester film of 75 $\mu$m thick.

Table 5

| Example No. | Compound No. | Total rotating number until breaking |
|---|---|---|
| 13 | 1 | >92000 |
| 14 | 2 | >92000 |
| 15 | 3 | >92000 |
| 16 | 7 | >92000 |
| Comparative Example 3 (Krytox 143 AC) | | 23000 |

As is clear from Table 5, the magnetic coating films according to this invention are by far superior in durability to that of Comparative Example 3.

**Claims**

**1.** A magnetic recording medium comprising
(a) a non-magnetic substrate,
(b) a magnetic layer formed on said substrate, and
(c) a lubricating surface consisting of or containing an organic compound having (i) a perfluoro group and (ii) a hydrocarbon group or a perfluoro hydrocarbon group connected to, fused in, mixed with or adsorbed in a polymeric binder contained in said magnetic layer or in a lubricating surface layer.

**2.** A magnetic recording medium according to claim 1, wherein said polymeric binder is present in a lubricating surface layer formed on said magnetic layer, said surface layer comprising an organic polymeric material as said binder and said organic compound fused in said organic polymeric material.

**3.** A magnetic recording medium according to claim 1 or claim 2 wherein said organic compound is exposed at said lubricating surface.

**4.** A magnetic recording medium according to any one of claim 1 to 3, wherein the organic compound includes a structure represented by the formula:

$R_f$ - A - CO -

wherein $R_f$ is a perfluoro polyoxyalkyl group; and A is a group represented by the formula:

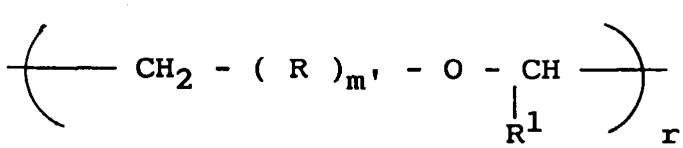

wherein R is an oxyalkylene group having 2 to 3 carbon atoms or a substituted oxyalkylene group; $R^1$ is a hydrogen, a methyl group or a phenoxymethyl group; m' is an integer of from 1 to 50; and r is zero or 1.

**5.** A magnetic recording medium according to any one of claims 1 to 3, wherein the organic compound is represented by the formula:

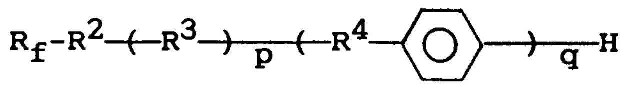

wherein $R_f$ is a perfluoro polyoxyalkyl group; $R^2$ is $-CH_2-$ or -CO-, or may be omitted; $R^3$ is an oxyalkylene group; p is zero or an integer of 1 to 20; $R^4$ is -COO-, -CONH- , $-CH_2-O-$ , -O- , $-O-CH_2-$ , or

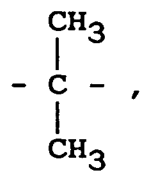

each unit

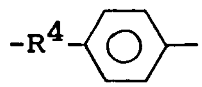

being the same or different; and q is an integer of from 1 to 20.

**6.** A magnetic recording medium according to claim 5 wherein the organic compound is represented by the formula:

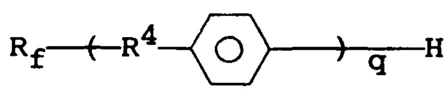

wherein $R_f$ is a perfluoro polyoxyalkyl group; $R^4$ is a -COO- -CONH- or -O- ; and q is an integer of 1 to 20.

**7.** A magnetic recording medium according to any one of claims 1 to 3, wherein the organic compound is represented by the formula:

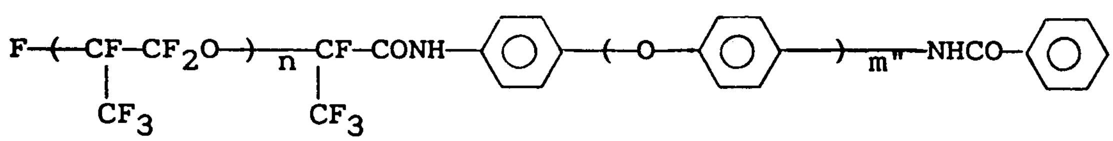

wherein n is an integer of 1 to 50 and m'' is an integer of 1 to 5.

**8.** A magnetic recording medium according to any one of claims 1 to 3, wherein the organic compound is represented by the formula:

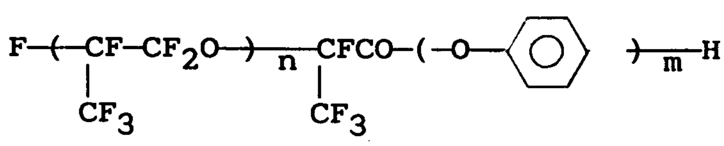

wherein m is an integer of 1 to 50; and n is an integer of 1 to 50.

**9.** A magnetic recording medium according to any one of claims 1 to 3, wherein the organic compound is represented by the formula:

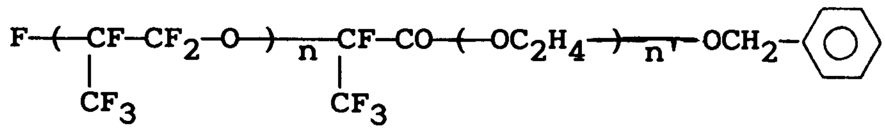

wherein n is an integer of 1 to 50; and n' is an integer of 1 to 30.

**10.** A magnetic recording medium according to any one of claims 1 to 3, wherein the organic compound is represented by the formula:

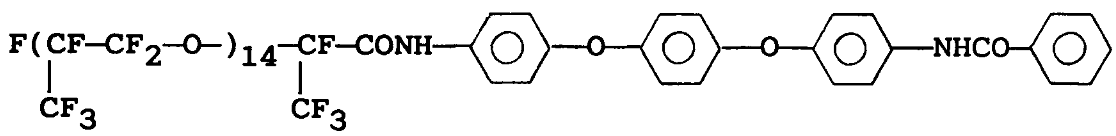

**11.** A magnetic recording medium according to any one of claims 1 to 10, wherein the polymeric binder is at least one member selected from polyimides, polyetheramides, phenol resins and epoxy resins.

**12.** A magnetic recording medium according to any one of claims 1 to 11, wherein the magnetic layer is a continuous magnetic layer.

**13.** Use of the magnetic recording medium according to any one of claims 1 to 11 in a magnetic head-magnetic recording medium assembly comprising

(I) the magnetic recording medium,

(II) a magnetic head having a slidable magnetic tip for recording information into and reading information out from said recording medium; and

(III) a means for driving said recording medium relative to said magnetic head so as to carry out the recording and reading out of the information.

**14.** A process for producing a magnetic recording medium which comprises:

a first step of mixing an organic compound having a perfluoro group with a polymeric material,

a second step of mixing the mixture obtained in the first step with a magnetic coating composition, and

a third step of coating the magnetic coating composition obtained in the second step on a disk-like substrate, followed by heat treatment.

**15.** A process according to claim 14, wherein the organic compound includes a structure represented by the formula:

$R_f$ - A - CO -

wherein $R_f$ is a perfluoro polyoxyalkyl group; and A is a group represented by the formula:

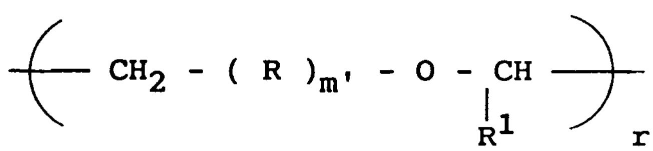

wherein R is an oxyalkylene group having 2 to 3 carbon atoms or a substituted oxyalkylene group; $R^1$ is hydrogen, a methyl group of a phenoxymethyl group; m' is an integer of 1 to 50; and r is zero or an integer of 1.

**16.** A process according to claim 14, wherein the organic compound is represented by the formula:

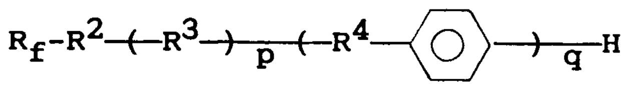

wherein $R_f$ is a perfluoro polyoxyalkyl group; $R^2$ is $-CH_2-$ or -CO- , or may be omitted; $R^3$ is an oxyalkylene group; p is zero or an integer of 1 to 20; $R^4$ is -COO--CONH- , $-CH_2-O-$ , -O- , $-O-CH_2-$ , or

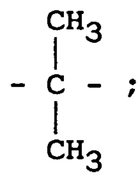

and q is an integer of 1 to 20.

**Patentansprüche**

**1.** Magnetisches Aufzeichnungsmaterial, umfassend
(a) einen nicht-magnetischen Schichtträger,
(b) eine auf dem Schichtträger ausgebildete magnetische Schicht und
(c) eine Gleitoberfläche, bestehend aus oder enthaltend eine organische Verbindung mit (i) einer Perfluorgruppe und (ii) einer Kohlenwasserstoffgruppe oder einer Perfluorkohlenwasserstoffgruppe, die mit einem in der magnetischen Schicht oder in der Gleitoberflächenschicht enthaltenen polymeren Bindemittel verbunden, verschmolzen, vermischt oder darin adsorbiert sind.

**2.** Magnetisches Aufzeichnungsmaterial nach Anspruch 1, wobei das polymere Bindemittel in einer Gleitoberflächenschicht, die auf der magnetischen Schicht ausgebildet ist, vorhanden ist, wobei die Oberflächenschicht ein organisches polymeres Material als Bindemittel enthält und die organische Verbindung mit dem organischen polymeren Material verschmolzen ist.

**3.** Magnetisches Aufzeichnungsmaterial nach Anspruch 1 oder 2, wobei die organische Verbindung auf der Gleitoberfläche freiliegt.

**4.** Magnetisches Aufzeichnungsmaterial nach einem der Ansprüche 1 - 3, wobei die organische Verbindung eine Struktureinheit der folgenden Formel umfaßt:

$R_f$ - A - CO -

worin $R_f$ eine Perfluorpolyoxyalkylgruppe bedeutet; und A eine Gruppe der folgenden Formel bedeutet:

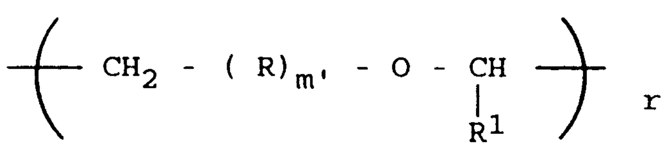

worin R einen Oxyalkylenrest mit 2 - 3 Kohlenstoffatomen oder einen substituierten Oxyalkylenrest bedeutet; $R^1$ ein Wasserstoffatom, eine Methylgruppe oder eine Phenoxymethylgruppe bedeutet; m' eine ganze Zahl von 1 - 50 bedeutet; und r den Wert 0 oder 1 hat.

**5.** Magnetisches Aufzeichnungsmaterial nach einem der Ansprüche 1 - 3, wobei die organische Verbindung die folgende Formel aufweist

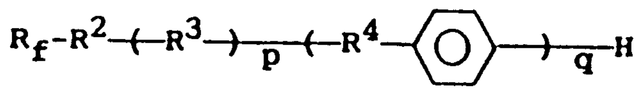

worin $R_f$ eine Perfluorpolyoxyalkylgruppe bedeutet; $R^2$ die Bedeutung $-CH_2-$ oder -CO- hat oder entfallen kann; $R^3$ eine Oxyalkylengruppe bedeutet; p den Wert 0 hat oder eine ganze Zahl mit einem Wert von 1 - 20 ist; $R^4$ die Bedeutung -COO-, -CONH- , $CH_2$-O- , -O- , -O-$CH_2$- oder

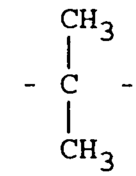

hat, wobei die einzelnen Einheiten

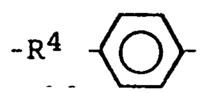

gleich oder verschieden sind; und q eine ganze Zahl von 1 - 20 bedeutet.

**6.** Magnetisches Aufzeichnungsmaterial nach Anspruch 5, wobei die organische Verbindung folgende Formel aufweist:

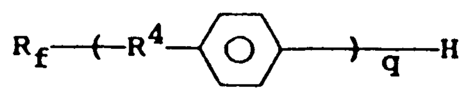

worin $R_f$ eine Perfluorpolyoxyalkylgruppe bedeutet; $R^4$ die Bedeutung -COO- , -CONH- oder -O- hat; und q eine ganze Zahl mit einem Wert von 1 - 20 ist;

**7.** Magnetisches Aufzeichnungsmaterial nach einem der Ansprüche 1 - 3, wobei die organische Verbindung folgende Formel aufweist

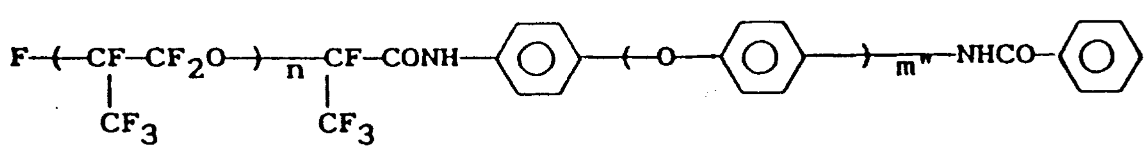

worin n eine ganze Zahl mit einem Wert von 1 - 50 ist und m" eine ganze Zahl mit einem Wert von 1 - 5 ist.

**8.** Magnetisches Aufzeichnungsmaterial nach einem der Ansprüche 1 - 3, wobei die organische Verbindung die folgende Formel aufweist:

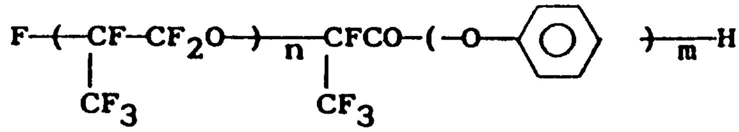

worin m eine ganze Zahl mit einem Wert von 1 - 50 ist; und n eine ganze Zahl mit einem Wert von 1 - 50 ist.

**9.** Magnetisches Aufzeichnungsmaterial nach einem der Ansprüche 1 - 3, wobei die organische Verbindung die folgende Formel aufweist:

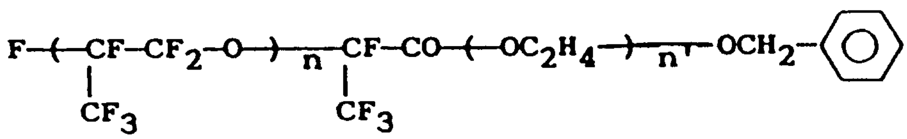

worin n eine ganze Zahl mit einem Wert von 1 - 50 ist; und n' eine ganze Zahl mit einem Wert von 1 - 30 ist.

**10.** Magnetisches Aufzeichnungsmaterial nach einem der Ansprüche 1 - 3, wobei die organische Verbindung die folgende Formel aufweist:

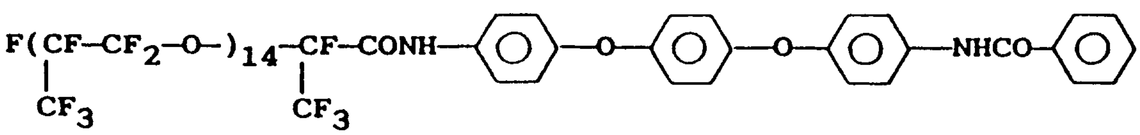

**11.** Magnetisches Aufzeichnungsmaterial nach einem der Ansprüche 1 - 10, wobei es sich beim Polymeren Bindemittel um mindestens einen Bestandteil aus der Gruppe Polyimide, Polyetheramide, Phenolharze und Epoxyharze handelt.

**12.** Magnetisches Aufzeichnungsmaterial nach einem der Ansprüche 1 - 11, wobei es sich bei der magnetischen Schicht um eine kontinuierliche magnetische Schicht handelt.

**13.** Verwendung des magnetischen Aufzeichnungsmaterials nach einem der Ansprüche 1 - 11 in einer Magnetkopf-Magnetaufzeichnungsmaterial-Anordnung, umfassend

(I) das magnetische Aufzeichnungsmaterial,

(II) einen Magnetknopf mit einer gleitbaren Magnetspitze zur Aufzeichnung von Informationen auf das Aufzeichnungsmaterial und zum Auslesen dieser Informationen vom Aufzeichnungsmaterial; und

(III) Mittel zum Antrieb des Aufzeichnungsmaterials relativ zum Magnetkopf, um das Aufzeichnen und Auslesen der Information vorzunehmen.

**14.** Verfahren zur Herstellung eines magnetischen Aufzeichnungsmaterials, umfassend:

- eine erste Stufe zum Mischen einer organischen Verbindung mit einer Perfluorgruppe mit einem polymeren Material,
- eine zweite Stufe zum Mischen des in der ersten Stufe erhaltenen Gemisches mit einer magnetischen Beschichtungsmasse und
- eine dritte Stufe zum schichtförmigen Aufbringen der in der zweiten Stufe erhaltenen magnetischen Beschichtungsmasse auf einen scheibenartigen Schichtträger, gefolgt von einer Wärmebehandlung.

**15.** Verfahren nach Anspruch 14, wobei die organische Verbindung eine Struktureinheit der folgenden Formel umfaßt:

$R_f$ - A - CO -

worin $R_f$ eine Perfluorpolyoxyalkylgruppe bedeutet; und A eine Gruppe der folgenden Formel bedeutet:

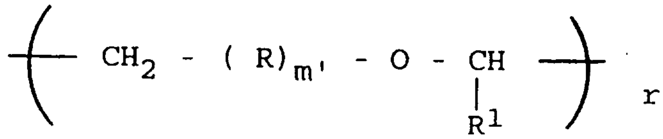

worin R einen Oxyalkylenrest mit 2 - 3 Kohlenstoffatomen oder einen substituierten Oxyalkylenrest bedeutet; $R^1$ ein Wasserstoffatom, eine Methylgruppe oder eine Phenoxymethylgruppe bedeutet; m' eine ganze Zahl von 1 - 50 ist; und r 0 oder die ganze Zahl 1 bedeutet.

**16.** Verfahren nach Anspruch 14, wobei die organische Verbindung die folgende Formel aufweist

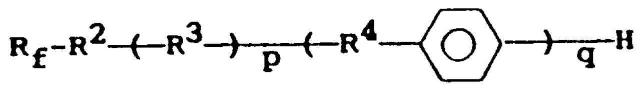

worin $R_f$ eine Perfluorpolyoxyalkylgruppe bedeutet; $R^2$ die Bedeutung $-CH_2-$ oder -CO- hat oder entfallen kann; $R^3$ eine Oxyalkylengruppe bedeutet; p den Wert 0 hat oder eine ganze Zahl mit einem Wert von 1 - 20 ist; $R^4$ die Bedeutung -COO-, -CONH- , $-CH_2-O-$ , -O- , $-O-CH_2-$ oder

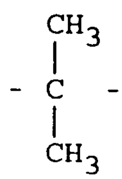

hat, wobei die einzelnen Einheiten $-R^4$ - - gleich oder verschieden sind; und q eine ganze Zahl von 1 - 20 bedeutet.

## Revendications

**1.** Support d'enregistrement magnétique comprenant
(a) un substrat non magnétique,
(b) une couche magnétique formée sur ledit substrat, et
(c) une surface lubrifiante constituée de, ou contenant un composé organique ayant (i) un groupe perfluoro et (ii) un groupe hydrocarboné ou un groupe hydrocarboné perfluoré relié à, fondu dans, mélangé avec, ou absorbé dans un liant polymère contenu dans ladite couche magnétique ou dans une couche de surface lubrifiante.

**2.** Support d'enregistrement magnétique selon la revendication 1, dans lequel ledit liant polymère est présent dans une couche de surface lubrifiante formée sur ladite couche magnétique, ladite couche de surface comprenant un matériau polymère organique constituant ledit liant et ledit composé organique fondu dans ledit matériau polymère organique.

**3.** Support d'enregistrement magnétique selon la revendication 1 ou la revendication 2, dans lequel ledit composé organique est exposé sur ladite surface lubrifiante.

**4.** Support d'enregistrement magnétique selon l'une quelconque des revendications 1 à 3, dans lequel le composé organique comprend un groupe répondant à la formule :

$R_f$-A-CO-

dans laquelle $R_f$ représente un groupe perfluoropolyoxyalkyle ; et A représente un groupe répondant à la formule :

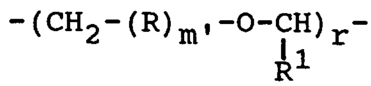

dans laquelle R représente un groupe oxyalkylène ayant 2 à 3 atomes de carbone ou un groupe oxyalkylène substitué ; $R^1$ représente un hydrogène, un groupe méthyle ou un groupe phénoxyméthyle ; m' représente un nombre entier de 1 à 50 ; et r est égal à 0 ou à 1.

**5.** Support d'enregistrement magnétique selon l'une quelconque des revendications 1 à 3, dans lequel le composé organique répond à la formule :
dans laquelle $R_f$ représente un groupe perfluoropolyoxyalkyle, $R^2$ représente $-CH_2-$ ou -CO-, ou peut être omis ; $R^3$ représente un groupe oxyalkylène ; p est égal à 0 ou à un nombre entier de 1 à 20 ; $R^4$ représente -COO-, -CONH-, $-CH_2-O-$, -O-, $-O-CH_2-$, ou

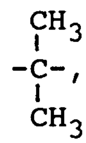

les motifs étant identiques ou différents ; et q représente un nombre entier de 1 à 20.

**6.** Support d'enregistrement magnétique selon la revendication 5, dans lequel le composé organique répond à la formule :
dans laquelle $R_f$ représente un groupe perfluoropolyoxyalkyle; $R^4$ représente -COO-, -CONH-, ou -O- ; et q représente un nombre entier de 1 à 20.

**7.** Support d'enregistrement magnétique selon l'une quelconque des revendications 1 à 3, dans lequel le composé organique répond à la formule :
dans laquelle n représente un nombre entier de 1 à 50 et m'' représente un nombre entier de 1 à 5.

**8.** Support d'enregistrement magnétique selon l'une quelconque des revendications 1 à 3, dans lequel le composé organique répond à la formule :
dans laquelle m représente un nombre entier de 1 à 50 ; et n représente un nombre entier de 1 à 50.

**9.** Support d'enregistrement magnétique selon l'une quelconque des revendications 1 à 3, dans lequel le composé organique répond à la formule :
dans laquelle n représente un nombre entier de 1 à 50 ; et n' représente un nombre entier de 1 à 30.

**10.** Support d'enregistrement magnétique selon l'une quelconque des revendications 1 à 3, dans lequel le composé organique répond à la formule :

**11.** Support d'enregistrement magnétique selon l'une quelconque des revendications 1 à 10, dans lequel le liant polymère est au moins un élément choisi parmi les polyimides, les polyétheramides, les résines phénoliques, et les résines époxy.

**12.** Support d'enregistrement magnétique selon l'une quelconque des revendications 1 à 11, dans lequel la couche magnétique est une couche magnétique continue.

**13.** Utilisation du support d'enregistrement magnétique selon l'une quelconque des revendications 1 à 11 dans un ensemble tête magnétique-support d'enregistrement magnétique comprenant
(I) le support d'enregistrement magnétique,
(II) une tête magnétique ayant une pointe magnétique pouvant glisser pour enregistrer des informations dans ledit support d'enregistrement et pour y lire des informations ; et
(III) un moyen pour déplacer ledit support d'enregistrement par rapport à ladite tête magnétique, de manière à effectuer l'enregistrement et la lecture des informations.

**14.** Procédé de production d'un support d'enregistrement magnétique qui comprend :

une première étape de mélange d'un composé organique ayant un groupe perfluoro avec un matériau polymère,

une seconde étape de mélange du mélange obtenu dans la première étape avec une composition de revêtement magnétique, et

une troisième étape de dépôt de la composition de revêtement magnétique obtenue dans la seconde étape sur un support de type disque, suivie d'un traitement thermique.

**15.** Procédé selon la revendications 14, dans lequel le composé organique comprend un groupe répondant à la formule :

$R_f$-A-CO-

dans laquelle $R_f$ représente un groupe perfluoropolyoxyalkyle ; et A représente un groupe répondant à la formule :

$$-(CH_2-(R)_{m'}-O-\underset{R^1}{CH})_r-$$

dans laquelle R représente un groupe oxyalkylène ayant 2 à 3 atomes de carbone ou un groupe oxyalkylène substitué ; $R^1$ représente un hydrogène, un groupe méthyle ou un groupe phénoxyméthyle ; m' représente un nombre entier compris de 1 à 50 ; et r est égal à 0 ou à 1.

**16.** Procédé selon la revendication 14, dans lequel le composé organique répond à la formule :

dans laquelle $R_f$ représente un groupe perfluoropolyoxyalkyle, $R^2$ représente $-CH_2$, ou -CO-, ou peut être omis ; $R^3$ représente un groupe oxyalkylène ; p est égal à 0 ou à un nombre entier de 1 à 20 ; $R^4$ représente -COO-, -CONH-, $-CH_2-O-$, -O-, $-O-CH_2-$, ou

$$-\overset{CH_3}{\underset{CH_3}{C}}- \ ;$$

et q représente un nombre entier de 1 à 20.

FIG. 1

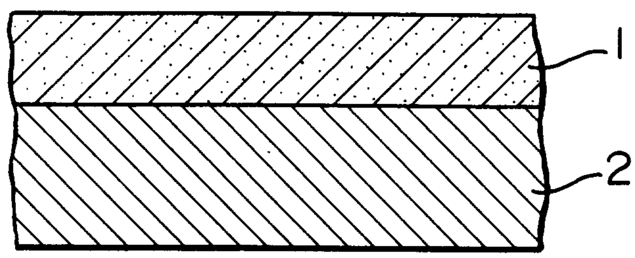


FIG. 2

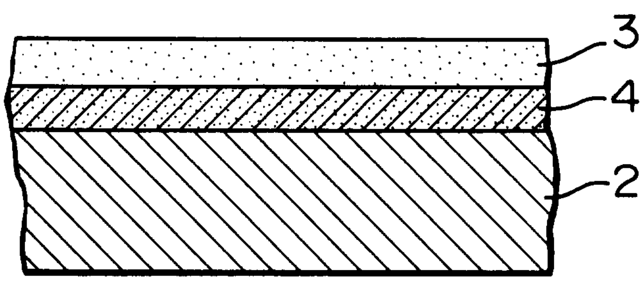

FIG. 3

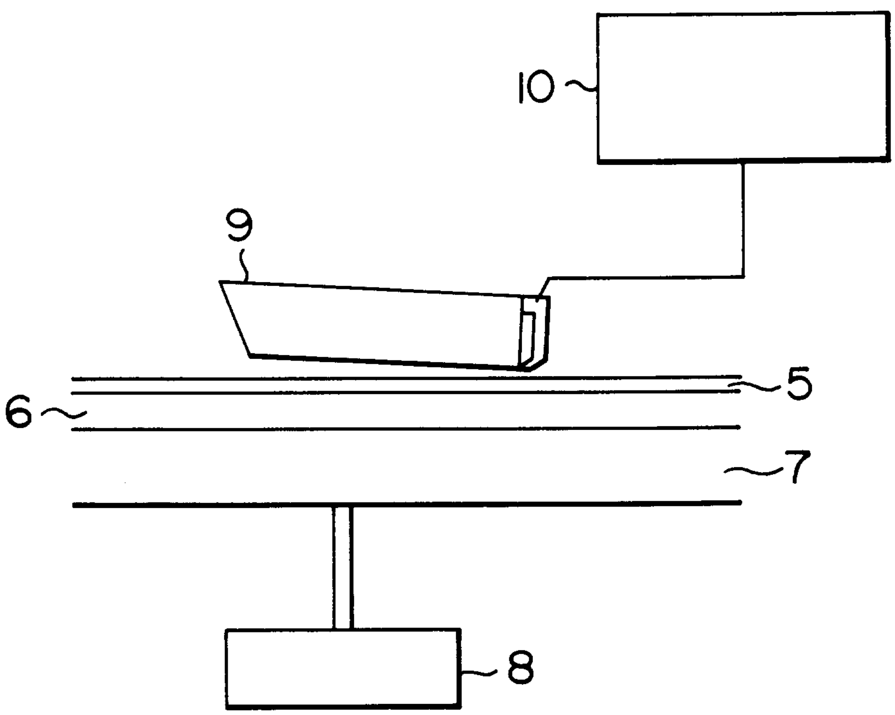

FIG. 4(a)

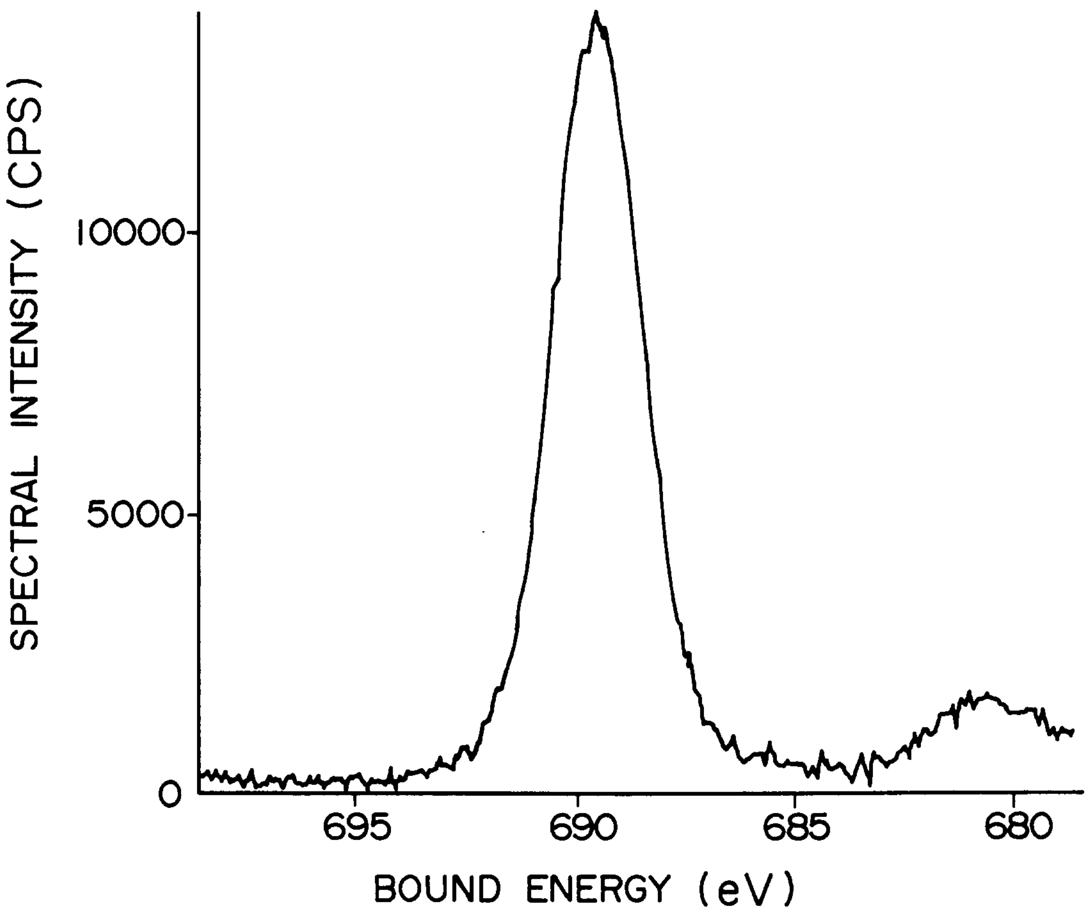
SPECTRAL INTENSITY (CPS)
10000
5000
0
695
690
685
680
BOUND ENERGY (eV)

FIG. 4(b)

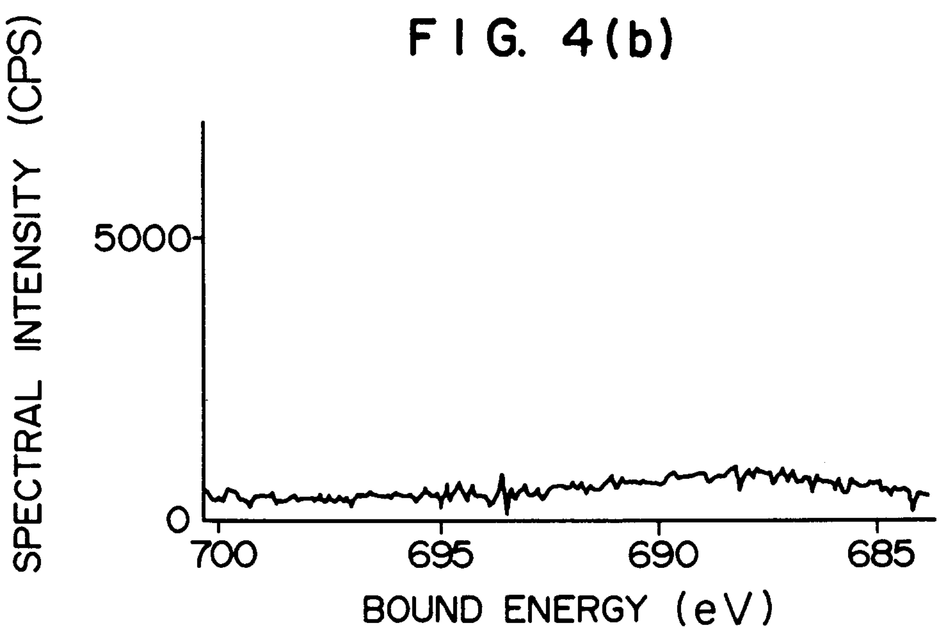
SPECTRAL INTENSITY (CPS)
5000
0
700
695
690
685
BOUND ENERGY (eV)